# EUROPEAN PATENT SPECIFICATION

(11) **EP 2 973 589 B1**
(45) Date of publication and mention of the grant of the patent: **17.01.2018**
(21) Application number: 14814099.9
(22) Date of filing: 14.03.2014
(51) Int. Cl.: G21C 1/30, G21C 3/02, G21C 11/08, G21B 1/23, G21C 11/00, G21D 1/00

(54) **ACCELERATOR-DRIVEN SUBCRITICAL REACTOR SYSTEM**
VON EINEM BESCHLEUNIGER ANGETRIEBENES UNTERKRITISCHES REAKTORSYSTEM
SYSTÈME DE RÉACTEUR SOUS-CRITIQUE PILOTÉ PAR ACCÉLÉRATEUR

(30) Priority: 15.03.2013 US 201361802322 P; 15.07.2013 US 201361846076 P; 13.03.2014 US 201414208707
(43) Date of publication of application: 20.01.2016
(73) Proprietor: Ellwood, Sutherland Cook, Tivoli, NY 12583 (US)
(72) Inventor: Ellwood, Sutherland Cook, Tivoli, NY 12583 (US)
(74) Representative: Schulz Junghans Patentanwälte PartGmbB
(86) International application number: PCT/US2014/029842
(87) International publication number: WO 2014/204536

(56) References cited:
- WO-A2-01/03142
- WO-A2-2012/030970
- JP-A- H08 146 175
- US-A1- 2007 064 859
- US-A1- 2011 286 564
- US-A1- 2013 028 364
- US-A1- 2013 028 364

## Description

### CROSS REFERENCE TO RELATED APPLICATIONS

The present invention claims benefit from US Patent Application Number 14/208,707 filed 13 March 2014, from US Patent Application Number 61/802,322 filed 15 March 2013, and from US Patent Application Number 61/846,076 filed 15 July 2013.

### FIELD OF THE INVENTION

The present invention relates generally to power and energy generation, conversion and distribution, and more specifically, but not exclusively, to nuclear power reactors, nuclear waste reduction, and rare-materials synthesis from nuclear reaction processes.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

In the field of nuclear energy production and waste reduction, the years 1992 and 1993/1994 marked two chapters of a major, little-known milestone.

At the end 1992, C.D. Bowman et al published "Nuclear energy generation and waste transmutation using an accelerator-driven intense thermal neutron source" (Nuclear Instruments and Methods in Physics Research, 1992, Vol. A320, pages 336-367), in which a proposal was made to use a proton accelerator for incinerating actinide wastes produced by a light-water Reactor (see also U.S. Pat. No. 5,160,696) with the projected potential of generating a net-positive energy output.

This was followed by the filing in 1994 (1993 WIPO) by Carlo Rubbia of an "Energy amplifier for nuclear energy production driven by a particle beam accelerator" (US Patent 5,774,514).

After the filing of the Rubbia patent, Bowman et al protested that they had anticipated Rubbia two years beforehand, that they were the first to propose what has been since termed a new type of reactor: "accelerator-driven, sub-critical nuclear reactor system."

There is sometimes ambiguity in the claiming or assigning of credit for the invention by either party, with Rubbia being typically assigned the credit of the two.

However, not mentioned in either the paper or the patent filing is the fact that the invention had actually been proposed and made public without patent application in 1990, for the express purpose of circulating this potentially important invention in the nuclear reactor, alternative energy, and high-energy and particle physics communities, at a time when oil prices were at an historic low and building of nuclear power plants as an option was generally opposed in most countries. The industry was moribund and in full retreat, nuclear power was widely reviled, Chernobyl was a recent memory a little over five years old. The inventor of the accelerator-driven, subcritical reactor system made a determination that the industry would be better aided, and the commercial prospects of his invention actually improved for potential exploitation of undisclosed, non-obvious aspects and improvements, by seeding the industry with the idea.

As the inventor was also (as is not un-often the case among scientists and inventors) also a science fiction writer, technologist and executive in high-technology as well as media, it was an easy option to propose the invention in a science fiction project that would be circulated both to the technical communities as well as to major Hollywood studios. At a minimum the technical community would be exposed to the idea and the operative components, and best-case scenario, it could be exposed to the general public in a way that might at least slightly pave the way for its future acceptance.

The untold story of the invention and dissemination of this technology is of relevance to the background of the invention not purely or primarily for the reasons of assigning credit, but to help explain the reasons for the differences between what Bowman and Rubbia proposed and why, and what was not disclosed to the technical or media communities and what forms the essence of the present disclosure, which reveals the complete nature of the invention that originated late 1989 and 1990.

The script known as "THE FORCE OF NATURE," a sci-fi adventure set on Earth, told the story of an alien force bent on terraforming the earth to the standard of an alien biology, a process driven in particular by a somewhat "misdirected" living alien "biological terraforming machine," a sort of "Leviathan"-type scary Balrog creature, wreaking havoc on a planet-changing scale. It fueled its conversion process by burning deposits of uranium, actinides and transuranics as fuel. (It is worth noting that the script circulated widely and at the highest levels of Hollywood, and that the "alien terraforming" idea was "borrowed" by another screenwriter, David Twohy, and used in a more direct and simplified form for his 1996 film, "The Arrival.")

The setting was the Amazonian rain forest, and the script (with its agenda in mind) intended to both point out the plight of the burning of the rainforest, illustrate that radioactive materials, while nothing to trifle with, are natural - and to contrast with the bogeyman of "nuclear" as the public knew it, put in the hands of the protagonists a new kind of energy technology, the accelerator-driven, subcritical system, which would be part of the "good" human technologies that would be used to foil the alien conquest.

As the present disclosure has been updated with current events information as of its current filing date, the parallels with the film "Argo," which depicted the use of Hollywood for "real-world" purposes, may be evident.

Distribution of the script began in 1990 and was sent or given to: the Cal-Tech/JPL community; the atomic energy/technology, ICBM and materials community in California; the hydrogen fuels and solar furnace emerging/energy community; and to Los Alamos and specifically the Bowman team. After the earlier and broad circulation to key figures in technical communities mentioned with permission to copy and share, it was again later sent to the Bowman team at Los Alamos, specifically by the author of the present disclosure, after seeing the referenced paper published.

The author of the present disclosure, noting that the paper proposed a system optimized to actinide burning and not energy production, encouraged Bowman to consider the energy production emphasis and the obvious candidates on the mass deficit curve (Thorium at a minimum standing out as that obvious candidate), rather than putting the primary emphasis on a uranium-cycle reactor to burn uranium reactor waste products, while producing an energy surplus. Though that application of the accelerator-driven proposal, waste incineration, was an obvious one as well.

It was also distributed widely to a number of senior Hollywood studio executives and producers, including the then-head of production at Warner Brothers, Lisa Henson (daughter of Jim); as well as to Stephen Spielberg's producers at Amblin Productions. The author of the present disclosure was by then a fairly senior production and technology executive as well as an inventor and founder of technology companies since the early eighties while still at University. The script was received very positively, but because of the quantity of computer animation and digital fx specified and required by the script, at the time (1990-2) the budget was assumed to be over $100 m, and even if the author of the script (and this disclosure) was an expert on such matters in the industry, that was a very high number at the time.

However, the most important purpose of the script had been accomplished by making public the fundamental concept and operative elements, to that those skilled in the art would know how to make and use a system of the type disclosed. That purpose was to get the ideas out there and hope that it might, first of all, help change the public's views on nuclear energy. And secondarily, that the time might come when the inventor (the author of the present disclosure) would be able to pursue those aspects of the system which were not disclosed nor obvious from the aspects that were disclosed.

It is also of significance to what is public and what is not that in the original public disclosure, the (present) inventor of the accelerator-driven, sub-critical reactor (which he termed a "STEM" fission reactor, which stood for Stimulated Emission - in other words, following the metaphor, that even if particle beam "stem" was broken, the reactor could not melt down) - explicitly characterized the proposed system as being more like a fusion reactor in key design respects. This description and characterization was further specified by description of the parts of the reactor in operation. And these basic features and structure were later directly reflected in the Rubbia patent filing a couple of years later, and as amended before its issuance in 1998, along with the explicit comparison to certain fusion designs and processes.

The one benefit of what was disclosed to the public, starting in 1990, whose achievement was not obvious from the information disclosed, and which the author of the present disclosure deliberately withheld in order to retain important innovations on which to patent in the future - assuming the ground was adequately prepared by the release of the basic idea that was covered on the one hand by Rubbia and on the other hand by Bowman later - was the applicability of the full system (including the non-disclosed elements) for use in other fuel cycles than what is commonly assumed or obvious, such as the Thorium cycle (already well-developed in Thorium salt reactors) and Uranium-cycle reducers.

In addition, other differences from conventional reactors were not disclosed, which contribute to realizing more efficient reactors that do use the obvious fuel systems (Thorium and Uranium) than the Rubbia designs.

The delayed but final unveiling of this history has some additional importance as well. Because the intent of "giving away" the potentially powerful idea and functional structure of the accelerator-driven, sub-critical reactor system and nuclear waste disposal system was to ensure that enough of the industry was moving in that direction to ensure sufficient momentum and success overall. Given the prejudices against nuclear energy, but now in the context of much higher energy cost, the author of the present disclosure, as the inventor of the arrangement of key systems and processes that make an accelerator-driven, sub-critical reactor (AD-SCR) or STEM reactor system the new class of system that it is, would prefer not to see patents held on those aspects that should be in the public domain and which were intended to be in the public domain to ensure the ultimate success of the idea.

Those detailed innovations that others, including Rubbia possibly in the details of the fuel cycle and in recently proposed improvements in monitoring and dynamically calibrating the neutron beam flux (pending application, US Published Application US 2013/028364), may propose surely should be the subject of patent protection. But not those proposals deliberately made public and intended to enable an entire field of development.

As an inventor in and commercializer of technologies in many other fields, some more closely related than others to the present subject, such as magneto-optics, magneto-photonics, wireless power distribution systems, flat screen video display systems, euctectic material fabrication systems, structural systems, and software for digital media production, the importance and value of IP protection is held very high.

But the last thing the inventor of the AD-SCR (aka, STEM reactor) wanted was his own inventions, intended to open up a field, not only potentially blocking more rapid uptake and development of the field, but potentially blocking his own final return to the field he pioneered - now that economic conditions and public sentiment have both evolved far enough to make the timing right for the rapid, broad-based and vigorous commercialization of this class of energy and nuclear waste reduction technology whose time may have finally come.

What is needed is a system and method for radically reducing or eliminating the thermal losses from existing accelerator-driven reactor designs which rely on thermal conversion methods, including steam turbines, thus further increasing the cost efficiency and safety of Thorium-cycle accelerator-driven, sub-critical reactors, while also enabling more energy-productive reactors designs optimized for reduction/incineration of nuclear waste from other nuclear reactor systems, other nuclear materials device waste, and nuclear weapons programs; while further extending the accelerator-driven, sub-critical model to other feed-stocks and elements which otherwise may be candidates for fertile-fissile processing schemes insufficiently energy productive but which are cheaper and widely dispersed globally; and whose use may be a source for synthesizing rare and value elements as final fission products; and finally providing a means to reducing the net break-even threshold for nuclear fusion; and to finally provide for a source of optical energy output and distribution for a wide range of industrial and consumer uses.

### BRIEF SUMMARY OF THE INVENTION

Disclosed is a system and method for radically reducing or eliminating the thermal losses from existing accelerator-driven reactor designs which rely on thermal conversion methods, including steam turbines, thus further increasing the cost efficiency and safety of Thorium-cycle accelerator-driven, sub-critical reactors, while also enabling more energy-productive reactors designs optimized for reduction/incineration of nuclear waste from other nuclear reactor systems, other nuclear materials device waste, and nuclear weapons programs; while further extending the accelerator-driven, sub-critical model to other feed-stocks and elements which otherwise may be candidates for fertile-fissile processing schemes insufficiently energy productive but which are cheaper and widely dispersed globally; and whose use may be a source for synthesizing rare and value elements as final fission products; and finally providing a means to reducing the net break-even threshold for nuclear fusion; and to finally provide for a source of optical energy output and distribution for a wide range of industrial and consumer uses.

The following summary of the invention is provided to facilitate an understanding of some of technical features related to reactors, and is not intended to be a full description of the present invention. A full appreciation of the various aspects of the invention can be gained by taking the entire specification, claims, drawings, and abstract as a whole. The existing Rubbia and Bowman et al embodiments of the new category of nuclear reactor system, with application to the problem of nuclear waste incineration from conventional reactors and atomic weapons programs, are simply statements of the basic principles and structural operative elements of the new type of system first proposed and made public starting in 1990 by the author of the present disclosure.

The existing Rubbia and Bowman et al embodiments of the new category of nuclear reactor system, with application to the problem of nuclear waste incineration from conventional reactors and atomic weapons programs, are simply statements of the basic principles and structural operative elements of the new type of system first proposed and made public starting in 1990 by the author of the present disclosure.

The applications to the well-known and studied Thorium cycle on the one hand, and to the task of incinerating waste products in a Uranium-based fuel cycle, were obvious and specified.

Leaving aside optional details with the disclosures of Bowman et al and Rubbia, the present disclosure looks past the basic disclosure of 1990 to the broader applicability of the AD-SCR (aka STEM) system to use of other fuels, including much cheaper and even more abundant fuels than Thorium (if not necessarily as energy-fruitful, but potentially much cheaper overall given the cheaper feed-stocks).

In addition, there were major undisclosed aspects of the original conception, which focus on more efficient and radical particle beam/plasma/solenoid and particle beam free particle laser energy conversion, as opposed to primary reliance on thermal energy conversion/recovery. These aspects alone significantly improve such a system no matter what fuel cycle, to a much more efficient Thorium cycle system and more energy-productive Uranium/waste reducer system.

The system of the present disclosure goes further and deeper in the direction of the basic principles and approach first disclosed, taking advantage of fuel materials systems which even in 1990 offered other advantages that the obvious and existing reactor fuel cycles simply could not provide. And those materials-systems advantages have only increased over the years.

It will be evident from the disclosure that, because different fuel cycles/materials systems do have different advantages, there are tradeoffs (as already indicated) in implementing designs based on these other here-to-for "impossible" fuel cycle/materials systems. Again, they may not be as productive of energy in the basic fuel cycle, but they can more than make up for it in the abundance of the fuel and the other value generated by adoption of a wider range of fuel system candidates.

Some of the embodiments of the present invention include a focus on improving overall efficiency of the reactor energy production by examining all the possible energy utilization pathways rather than tuning the entire design of the reactor for thermal conversion/steam turbine use. A containment system for the fuel is constructed without an intent to capture all the energy for thermal conversion; rather there are energy outlets for one or more of the reaction products, those reaction products including electromagnetic emissions (e.g., photons), charged particle emissions (e.g., protons and electrons), and neutral particle emissions (e.g., neutrons). The reactor design includes a number of collection channels for these purposefully-allowed reaction products that are existing within the reactor; for example optic collection channels for the photons, electrostatic/magnetic collection channels for the electrons, and mechanical collection channels for the neutrons. In some implementations there are included a feedback collection channel to return neutrons and/or protons back to the fuel to help improve efficiency by reducing/eliminating the external particle source, such as may be used for starting the process. By tuning the overall energy collection to the various reaction products, a different metric for efficiency is implicated than being tied to thermal inefficiencies of a steam turbine.

Embodiments of this design enable alternate energy stock to be used in addition to or in lieu of Thorium, such as other readily available and less expensive materials further improving the cost advantage of the basic design. Other embodiments enable efficient material synthesis because the reactor design, using the additional collection channels, enables the overall synthesis process to include a net positive energy while significantly tuned for material synthesis. While this design may not optimize some conventional metrics of reactor design, by synthesizing a material while producing a net positive overall energy profile, economics of material production are altered in important ways.

Any of the embodiments described herein may be used alone or together with one another in any combination. Inventions encompassed within this specification may also include embodiments that are only partially mentioned or alluded to or are not mentioned or alluded to at all in this brief summary or in the abstract. Although various embodiments of the invention may have been motivated by various deficiencies with the prior art, which may be discussed or alluded to in one or more places in the specification, the embodiments of the invention do not necessarily address any of these deficiencies. In other words, different embodiments of the invention may address different deficiencies that may be discussed in the specification. Some embodiments may only partially address some deficiencies or just one deficiency that may be discussed in the specification, and some embodiments may not address any of these deficiencies.

Other features, benefits, and advantages of the present invention will be apparent upon a review of the present disclosure, including the specification, drawings, and claims.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.

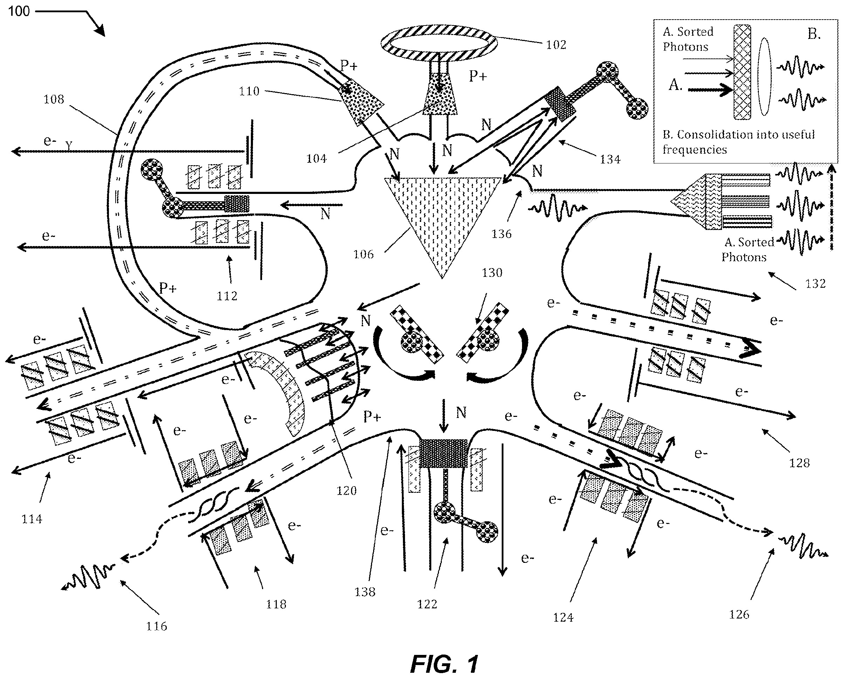

FIG. 1 illustrates an accelerator-driven subcritical reactor.

### DETAILED DESCRIPTION OF THE INVENTION

Embodiments of the present invention provide a system and method for radically reducing or eliminating the thermal losses from existing accelerator-driven reactor designs which rely on thermal conversion methods, including steam turbines, thus further increasing the cost efficiency and safety of Thorium-cycle accelerator-driven, sub-critical reactors, while also enabling more energy-productive reactors designs optimized for reduction/incineration of nuclear waste from other nuclear reactor systems, other nuclear materials device waste, and nuclear weapons programs; while further extending the accelerator-driven, sub-critical model to other feed-stocks and elements which otherwise may be candidates for fertile-fissile processing schemes insufficiently energy productive but which are cheaper and widely dispersed globally; and whose use may be a source for synthesizing rare and value elements as final fission products; and finally providing a means to reducing the net break-even threshold for nuclear fusion; and to finally provide for a source of optical energy output and distribution for a wide range of industrial and consumer uses. The following description is presented to enable one of ordinary skill in the art to make and use the invention and is provided in the context of a patent application and its requirements.

Various modifications to the preferred embodiment and the generic principles and features described herein will be readily apparent to those skilled in the art. Thus, the present invention is not intended to be limited to the embodiment shown but is to be accorded the widest scope consistent with the principles and features described herein.

FIG. 1 illustrates a reactor 100. The figure is a conceptual/high-level functional cross section of reactor, showing an embodiment of primary and representative operative power generation and recovery systems and options. Among the aspects, options, other embodiments or specific optimizations, or particular spatial configurations of one or more of the proposed and illustrated energy recovery/recapture and conversion systems, secondary systems, components, not shown are:
- Not shown to scale nor in required or necessary relative position of energy recovery/conversion structures.
- Pattern and relative position of particle and photon exit conduits, as well as guiding electro-magnets anodes/cathodes, low-friction ceramics, and other subsidiary and enabling components, as described in the present disclosure, are not shown.
- Additional standard power-plan operational systems are also omitted, as well as fuel replacement systems, thermal dump tanks (with Stirling Engine and other secondary energy recovery/generation systems such as conventional steam generators), for non-circulated or "spent" particles; details of centrifugal element and chemical element separation systems to implement optimized rare element production processes; or details of nuclear waste reduction optimized versions; or details of fusion reactor system employing the proposed energy recovery and conversion systems, are not specifically illustrated by this abstract schematic.
- Not are magnetic confinement means (optional) "behind" reactor walls overall reaction vessel for assisted deflection of charged particles. Tunable for managing and shaping particle flows.

Reactor 100 includes a startup accelerator/ proton source 102 for startup spallation target (may be same as operating target); supplementary proton source during operation (optional design: primary). A spallation target 104 driven by starter accelerator/ proton source 102. A reaction fuel vessel 106 contains/shapes emissions from selectively exposed fuel body.

A proton beam recapture 108 includes beam split and electromagnetic confinement. Primary accelerator source (recycle loop) of accelerator-driven subcritical reactor (ADS reactor). (optional design: secondary). A spallation target 110 for neutron production in operation. A remote inertial energy recovery 112 includes resonance conversion via an induction generator. A "reverse accelerator" proton beam/flow induction generator 114.

An optical energy output 116 is tuned for useful frequencies. A "Free Proton Laser" (FPL) "wiggler" 118 generates a coherent laser beam. A proximate inertial/resonant energy recovery 120: resonance conversion direct from reactor vessel wall components (e.g., tensioned membrane, floating panels, etc.) mounted on micro-actuators linked to micro generator arrays.

A vessel-structure linked inertial/resonant energy recovery 122: resonance conversion direct from reactor vessel wall as a total structure or major components structures, mounted on micro-actuators linked to micro generator arrays. A "Free Electron Laser" (FEL) "wiggler" 124. An optical energy output 126, tuned for useful frequencies. A "reverse accelerator" electron beam/flow induction generator 128. One or more optional variable particle or photon flow steering/deflector structures 130.

Photon output 132 from reactor: A. optical frequency separation means (e.g., high optical power load photonic bandgap filters, prisms, etc. B. Optical frequency consolidation phase, for conversion to a typically smaller number of useful optical frequencies for industrial process, photovoltaic conversion, or optical power distribution.

Tunable fast and thermal recycling system 134, redirect into reactor/fuel body; inertial/resonance energy recapture of tuned inertial bleed-off. Particle deflection surfaces (e.g., fast/thermal neutron) back into fuel body 136. Reaction vessel wall structure 138, shaped and composed of materials to optimally guide particle output to recapture structures and channels.

### I. Energy conversion and processing, general case:

There are substantial benefits to be gained from a greater departure from thermal-exchange-based components (and the typical lossiness associated thereto) and also a greater distance and de-coupling from operating in the "spontaneous"/critical boundary fission domain and system-design paradigm.

Addressing the power losses associated with thermal-based energy conversion employing steam turbine-centered systems in nuclear plant design, is an area of significant potential benefit.

As is known to the art, and as may be calculated by reference to the Rankine Cycle applied to a long history of empirical cases, high- temperature gas cooled reactors can be as efficient as modern fossil fired plants, but whether PWR or BWR (as are most commonly used in nuclear reactor design), they have an overall efficiency of about 30-40 percent, meaning that 60-70 percent of the heat produced is wasted and dissipates into the cooling water of the condenser. In public comment on the topic Tim Green, Professor of Power Engineering at Imperial College, London, estimated that regardless of technology used, losses during generation associated with the thermal conversion ("generation") processes average between 45 and 55 percent, including carbon fuel stock-fired thermal conversion generators. Steam-turbine-centered systems employing condensers, cooling towers significantly reduce the net efficiency of "nuclear power" as it is practiced today, including in other new proposed design types, such as Thorium salt reactors.

By contrast, an alternative energy conversion system is proposed in the present disclosure, which may be employed in Thorium cycle systems, Uranium-cycle systems optimized to disposal of radioactive waste from other systems and nuclear materials processing applications, and to other fuel-cycle options (detailed below).

A novel and more efficient proposal is made here to take the place of nuclear power systems in which a thermal exchange between the nuclear fuel composition and moderating media (light water, heavy water, graphite, molten salts, or (as is proposed by Rubbia), a molten lead, bismuth, or lead/bismuth mixture) both moderation and in thermal exchange, with the heated media (through more or less multiple intermediate thermal conversion system steps) heating a pressurized steam chamber (or other heat-exchange means) to drive a turbine generator.

The range of nuclear burning sequence (i.e., details of breeding/burning relative to thermal and/or fast neutron capture from the external beam vs. stimulated emissions as fertile fuel precursors are converted into fissile isotopes/materials) and cycle options that are employed in reactor design and known to the art will not be repeated here, as most are available to the system types of the present proposal depending on design considerations to optimize with the novel energy conversion system, in order to focus on the differences with the conventional approach.

In the new system of the present proposal, there is significantly less thermal capture or moderation employed with any kind of "blanket" or container or moderator/cooling optimized structure, liquid or solid (or even gaseous thermal-exchange optimized) - and in principle this can be reduced to practically minimal or significantly close to zero. So that thermal-local bleed-off of neutron and other particle and wave energy from the reaction process is minimized, although it may be retained for certain design variants as part of the local /in situ control of the reaction rate and balance of neutron input and stimulated emission rates.

Instead, an efficient direct energy routing, collection, and field-field conversion process is implemented:
1. The nuclear fuel burning unit(s) is partly or wholly provided within a particle and photon collection chamber, preferably close to the edge of such a chamber to allow for efficient design of particle and photon "funnels"
2. Input neutrons (a thermal and fast neutron channel, to provide for a mixture and dynamic tuning) are routed to the fuel-burning unit from outside the unit.
3. The chamber is preferably a partial vacuum, and may be a partial vacuum with a low-pressure noble gas, or a higher-pressure noble gas or gas mixture and may be provided with a pumping mechanism to create gas flow dynamics over the burning unit and fixtures and to tune the thermal balance of the fuel and the burning unit.
4. Magnetic and thermal shielding is provided for those mechanical fixtures and operating units associated with the unit and the neutron input channels devices and fixtures; a large imposed field is deployed at that end of the chamber to further deflect particles from moving in that direction.
5. The unit is far enough away from the chamber wall to enable charged particles that do escape enough freedom to be diverted by fields generated and imposed at that end for that purpose.
6. All surfaces are coated or fabricated integrally with thermally-reflecting and optically reflective materials, such as ceramics and (preferably periodically-structured materials) to implement efficient mirrors, (with all of these surfaces facing into the chamber optionally cooled from behind/outside the collection chamber), by means of "omnidirectional" bandgap structures (see Omniguide Corporation's technology for "perfect dielectric mirror" photonic crystal modeling software as applied to the operating requirements to reflect and guide intense photons to (preferably multiple) solar-furnace-type collection pipes.
7. Surfaces are further constructed geometrically to deflect and collect escaped neutrons. Not being charged, the neutrons are guided by low-friction collision (again, deploying extremely low coefficient of friction ceramics, which are also thermally insulating).
8. Such structures will tend to be convex-shaped, as is expected, but to assist in shaping large surfaces into optically efficient surfaces, tensioned composites may be employed as a backing-substrate to implement complex-curve topologies. The composites themselves may include thermally insulating aerogels (see Birdair/Cabot Technologies Tensotherm product), and may be coated and or surfaced with applied components of thermally reflective and/or insulating materials (encapsulated ceramic powder/nano-powders) and optically band-gapped or bulk-reflecting materials.
9. In thermally ruggedized tensioned membrane structures, highly conductive graphene or nanotube-composites may be employed in a textile-composite conductive circuit to help implement complex and smooth magnetic field shaping and support primary electro-magnet arrays from behind. Fast-discharge graphene super-capacitors may also be implemented to provide rapid balancing of power levels to the magnetic containment and anode/cathode particle attraction systems.
10. With this structural system, the collection chamber can be formed as multiple smoothly shaped 3D "starfish", with multiple pairs of particle exit "funnels" at many points in the system reducing the load that would otherwise obtain from one or two much larger "funnels" implementing magnetic and electric containment and routing, enabling geometries otherwise very difficult to achieve with rigid panel structural systems. Multiple smaller funnels means that diversion of particles on exit from the burning unit(s) flows to sets of cathode and anode plates adjacent to exit channels is minimized, reducing power losses on the field-field power conversion process.
11. Optical collection channels, like the particle exit channels, are multiple and may employ any of the commercially available methods of high-flux solar furnace collection systems to efficiently gather, route, and collect output from the reaction process.
12. Facing load (force normal) bearing of a tensioned wall, per layer, exceeds tolerances for roof-loading bearing requirements of the tensioned membrane roof of Denver International Airport. Load-bearing capacity in a resonant system increases for each layer of N layers of tensioned wall.
13. Magnetically-permeable materials may be employed to realize effective penetration of generated fields from within and, more importantly, behind the tensioned surface.
14. Behind protected tensioned membrane composites, arrays of active electro magnets and passive magnetic materials implement magnetic "bottle/funnel" shapes to guide charged particle flows.
15. And/or rigid structures instead of tensioned-membranes may be deployed.
16. To repeat the overall scheme: A trinary charged particle and em-wave/photon routing and collection system is employed PLUS a mechanical routing and collection system for neutrons to re-form into an efficient inertial beam, which collects, concentrates and then up- or down-converts (in the case of em-wave/photon output from the reaction) or sorts and attracts, by means of charged "anode" and "cathode" analogues (poled receivers, spatially separated in the collection chamber) and a field-structured "funnel", the streams of escaping particles from the fuel composite mass and inserts said streams into particle-induction motor generator, on principles similar (but which may be viewed as "inverted" to particle accelerator schemes), or optionally inserted into a particle "wiggler", as employed in free electron laser systems, but designed to work with particle beams of all types, while the inertial neutron beam is diverted by thermally-reflective and low-friction pipeline either back into the reactor unit itself or to do work in a direct mechanical recovery system, alone or in conjunction with gas plasma.
17. The action of the energetic particles doing work against the imposed fields of the EM-guided pathways converts energy and bleeds off the initial thermal energy of the particles and avoids conversion into thermal energy of the photons.
18. Neutrons are mechanically routed back into the burning system, with their energy levels differing
19. A portion of the particle flow may be diverted at any convenient stage (before bleed-off/conversion via solenoid induction series into electrical power and/or bleed-off/conversion by particle "wiggler" into laser power) back into the accelerator pipeline and inserted into the nuclear burning unit; a combination of fast and thermal neutrons, after having bled off their high-energy quota from the field-field induction electrical power generating and/or laser-generating processes.
20. Solar-furnace, high-intensity em-wave/photon collection units exit the output wave energy into a wave-energy/photon processing stage:
   a. This stage may consist of separation of frequencies - sorting - by means of ruggedized and multiple prisms and other methods of spectral separation known to the art, employing high-thermal-load-bearing optics components for any bulk/high-intensity sorting.
   b. Optionally, further division of the optical power-load to and into multiple bulk optical channel levels, continuing the division until intensity levels are reached which enables practical coupling and transmission into optical fibers for near or distant transmission.
   c. Optional frequency/wavelength modulation/shifting may then be effectively employed, at optimal power levels, (up- or down-conversion) at this point to consolidate generated wave radiation into frequencies of convenience, such as near IR and IR, which may be pumped into the telecom network and thereby reduce power requirements for telecommunications.
   d. Whether sorted or unsorted, coherent rather than non-coherent light may be required or preferred. Sorting and passive/active coherence alignment may be performed, including use of retarder/interferometer techniques (Mach-Zehnder, etc.)
   e. Optionally, "raw" collected wave radiation, sorted or unsorted, may be input as "pump" radiation into laser devices (large-scale or multiple small devices in arrays), to furnish coherent light for telecom or raw "process energy" distribution. This is not as preferred, due to expected conversion losses.
   f. Optionally, unprocessed output radiation (sorted or unsorted) may also be guided to photo-voltaic conversion systems. This option may be preferable because it enables the use of whatever may be the best array of photo-voltaic type photo-electron conversion available, but it is less preferred due to the expected lower conversion efficiencies.
   g. Preferred for the collection, processing and distribution of output wave radiation from the nuclear burning process, the radiation is sorted and stepped-down (in terms of power per channel) to multiple lower-capacity fiber channels for local or long-distance distribution.
   h. Optical energy, whether passing through a coherence conversion stage or not, then may be transmitted "continuously", or it may be pulsed, if opto-electronic/photonic switching technology is used to break the power output into quantized portions.
   i. This then enables and feeds into one "leg" of a related all-optical power distribution system, under separate disclosure by the author of the present disclosure.
21. In the induction-based electrical generation system, electrons and protons are sorted into separate processing lines, where particle flows induce current in the inductor rings in series. Many design options known to the art of electrical power generation and accelerator design may be implemented, including both linear and non-linear system (geometries).
22. Thermal power conversion, integrated as part of any moderation materials "jacket" which may be employed as part of an optimal burning unit design, may be implemented by processing of hot noble gas exchange flowing over exposed radiator fins of a burning unit, or if liquid or molten cooling is employed, through a limited circuit employed for that purpose. Transparent, high-thermal load-bearing aerogels (solid or particulated) may be employed as structural/thermal elements of the burning unit and mechanical fixture as part of the solution sent to mechanical robustness, strength in compression, light-weight, thermal insulation, and optical transparency (which may be varied based on choice of type of aerogel and aerogel composites).
23. However, a substantial portion of if not a large majority of the surface of the fuel matrix will be shaped and exposed such that particles and photons will freely escape from the fuel body. Thus, the burning body is exposed to the contact points of the mechanical fixture, which are advantageously moderating materials, and exposed to the flow of the low pressure noble gas mixture, and shielded with imposed magnetic fields as needed to provide a path of least resistance for the statistically calculated primary escape paths of particles and photons not absorbed into the moderator "pads" of the mechanical fixture's contact points.
24. The fuel body shaping may also contribute to the statistically-calculated average and mean paths of particle escape, given magnetic shielding and strategic position of electrical fields.
25. The system is typically initiated by a spallation source, as the "spark plug," as a certain portion of unprocessed "fast" neutrons sorted and routed out of the collection chamber(s) are diverted and "recycled" back to the burning unit; any deficit in neutron flow is made up by protons routed back into the spallation unit; a portion of thermal neutrons whose high-energy has been bled off in the conversion process are furnished as separate channel(s) to the unit as well, to provide tunable injected balance to any fuel system.
26. In other versions of the proposed system, in which the nuclear energy fuel cycle or process is different from the basic types described, other particles and inputs may be recycled or cycled in from other sources, as may be required, but all as part of a direct field-field particle and photon collection and accelerator cycling-recycling system
27. Optionally, when the system may be temporarily offline for maintenance, or to enable live-maintenance of the burning unit with the "STEM" broken, or as part of load-balancing in a power grid context, synchrotron storage rings may be employed to divert part of or all of the normal particle flow and "store" power of particle streams generated by the reactor and collected by the collection process.
28. To more efficiently capture the energy of the neutron flow that may not be needed for the STEM beam, as an alternative to an "inverse accelerator-type" inductive generator system, a semi-mechanical system may be employed in a kind of mechanical+ "gas plasma motor",
   a. in which a proton (and other + charge particle) "plasma" body is generated in a particle channel supplied by the reaction system, or alternatively multiple of the exit channels may be combined, either particles of the same type, or in more complex types, joined in a plasma-pinch structure and implemented in separate containment chambers used for this purpose;
   b. but in general, a positive particle plasma mass, and the inertial energy of the neutrons, whose energy and particle volume is renewed as its latent energy is consumed in the "plasma motor process," is driven down (by flow from the channels supplied by the collection chamber) a reciprocating magnetic piston chamber (which drives a conventional generator system), or a Stirling-engine-type displacement surface for a Stirling-engine-type generator; all surfaces coated by a magnetically permeable, thermally-insulating, low-friction ceramic;
   c. Added to the charged plasma mass are the inertial energy of the neutron beam flow not required for or cycled back to the reactor.
   d. Inside of this "piston" chamber - from the walls and from the facing surface of a movable piston - is deployed generated EM fields (by Electro-magnet/perm magnets etc.).
   e. The plasma mass + neutron flow, renewed from the reactor source, thus expends its energy in this electro-magnetic/mechanical conversion process; as the energy level of the mass is reduced and it cools, the chamber is evacuated and the particles are then, as may be needed, recycled into the particle cycling system.
   f. After evacuation of the chamber, on cooling of the plasma and neutrons, an exit channel separates thermal neutrons and positive particles for recycling;
   g. The "plasma motor" part of this overall "neutron beam plasma generator" as is evident has wider application, in small and compact as well as larger forms, for systems that feed and generate the plasma body from different sources and in different ways than the ways shown for the other elements of the present overall system proposal, that is, different from that of a nuclear reactor system.
   h. A version which uses only a high-power, but diffuse, neutron beam spread in a low-friction piston system (i.e. omitting the plasma component), is also proposed as an alternative design configuration option for systems in which there are sufficient excess neutrons available but for which the requirements of the dual neutron beam/plasma system are not optimal for the overall generation facility.
   i. Another design alternative, which involves less loss for the neutrons which must be diverted in a thermally-efficient mechanical routing system, is a system in which the neutron flows from a first burning unit are minimally diverted and continue in substantially straight paths and are injected into multiple other reactor/collection chambers, each in a series; with net excess neutrons employed in a direct Stirling-engine system at the terminus.
   j. Alternatively, in the collection chamber, a certain percentage mechanical surfaces are dual-purpose shaped to mechanically reflect neutrons back to the source.
   k. Alternatively and preferably, the collection chamber surface (either via the tensioned membrane system, or by other mechanical inertia-accepting surfaces) is substantially flexible and resonantly tuned to the rate of flow of the fast neutrons, which are allowed to reflect and ricochet off the walls, which absorb the collisions in a mechanically resonant fashion; such resonant energy is bled off through mechanical communication of mechanically vibrating parts on the opposite side of the containment chamber, which are operatively connected as parts of electromagnetic induction generator devices, of which many configurations are known to the art or which may be developed in the future; the armature/actuators move through magnetic fields in many small or micro-induction generators and thereby induce a current flow, which is added to the aggregated electrical generation and the net efficient energy conversion of the system.
   l. And lastly, instead of or along with one or more of the other options, and as may be selected based on the energy levels of the neutron output, a more conventional thermal conversion system may be deployed, liquid/molten or gas, in which the neutrons heat an intermediate body or structure or volume of gas or liquid, which then drives a turbine (as opposed to the preferable Stirling-type system already disclosed, either in the neutron-only or gas plasma/neutron combination system).
   m. While losing efficiency by comparison to a direct-induction stream system (disclosed above), it lends itself to mechanical powering systems that require mechanical work be done in general, and not solely to rotate a dynamo-type component.
29. Any aspects or components of reactor design, as known to the art and as may be emerging or to be introduced in the future of what is now (finally) a once-again vibrant field, but not specifically addressed here is not intended to imply sufficiency of the scheme presented by their absence, but rather it is expected that those skilled in the art will understand the relative implications for the other typical components of the numerous variations in the details and systems of and related to reactor and power-plant design. Such components and issues do not change the essence of the nature and benefits of systems encompassed by the present proposal.
30. It is of the essence of this system that it is an indirect and "de-constructed" reactor -stage process and a spatially-separated version of AD-SCR system in which reaction products are preferably removed from the fuel mass and burning system as efficiently and as quickly as possible, with minimal loss of thermal energy in the particles as little loss of intensity or wavelength-based energy in the photons, and a more direct and efficient conversion of all the reaction-products of any reactor system.
31. Emerging from the foregoing is the critical importance of an intelligent energy collection and recovery structural system, capable of processing and recovering charged and neutral particle fission products, as well as E-M wave/photon fission products, and routing those energetic products to efficient field-field and inertial-mass-resonant energy conversion systems, while recycling a portion of excess fission products, as needed, back to the reaction unit and/or spallation source, as needed.

For consideration of the practical benefits of a shift away from thermal conversion to direct particle/photon field/wave conversion and processing, it is important to note the efficiency gains that have been made in commercial accelerator products and designs since 1990, as well as the important reductions in size and cost, as well as improvements in allied and mutually-benefiting devices and processes employing particle beams and high-intensity lasers (optical process energy generally) for manufacturing semiconductor and nano-materials, bulk materials, instrumentation, spacecraft propulsion systems, and medical devices, to name but a few.

Indicative of the improvements in accelerator cost, efficiency and compactness is the efficiency of the commercially-available, and available in compact form, DISAC distributed accelerator from eM Cube Corporation at greater than 60%, or 10 times the efficiency of older accelerator technologies.

Efficiencies of the "inverted" induction-flow based generator proposal of the present disclosure may be expected to significantly exceed this figure, which is alone substantially greater than the efficiencies of the conventional thermal/turbine systems of the Rubbia and other AD-SCR designs currently derived from this.

And the base reference number does not include or take into account the greater efficiencies gained by capture of wave/photon radiation and conversion, via free particle laser, of charged particle energy, for a potential optical power distribution system as low-loss as superconductive electrical power generation is hoped to be in theory.

An extremely low-friction fast neutron piping and recycling system, with optional inertial power conversion systems more efficient than conventional turbine systems, may see many variants beyond those provided for illustration of the general approach here, and which are subsumed under the general solution class proposed.

In parallel development of compact accelerators being developed in part for application in AD-SCR systems, there is the EMMA ("Electron Model of Many Applications") accelerator system developed in the UK, which is defined as a "non- scaling, fixed-field, alternating-gradient' (NS-FFAG) accelerator", and publicized in 2011 under the auspices of ThorEA (Thorium Energy Amplifier Association, a coalition of experts from several British universities and research institutes).

As the title of the coalition indicates, much has changed since 1990. In 2010 Aker Solutions, of Oslo, Norway, working with Carlo Rubbia concluded the design phase of its "Accelerator Driven Thorium Reactor" program.

The practicality of all the building blocks of the improved and more efficient version of AD-SCR, which follows through on the basic premise of the original invention in an indirect and sub-critical reactor design concept that is, at the same time and as a consequence and opportunity of this "de-constructed" and sub-critical design, is focused on total energy recovery and much greater energy conversion efficiencies than the conventional turbine thermal conversion systems, which are merely remnants and artifacts of the uranium fission critical-boundary reactor designs that the original AD-SCR "STEM" was specifically intended to escape from.

### II. Fuel cycles and materials systems, implementation: lighter and more common and plentiful elements in the fission sequence

There are, in addition to the much more efficient energy collection and conversion systems and options proposed in section I above, other valuable aspects of original invention in 1989/1990 and made public in 1990 that were not publicly disclosed at the time - and were not obvious or implied, either.

It is of the essence of the more efficient but also more indirect system of the original and present disclosure, that it is thereby flexible enough in configuration to allow for a wider variety and utilization of feedstocks, specifically, of lighter elements which are also substantially more abundant than Thorium (which is however, also substantially more abundant than Uranium, as well as cheaper and safer to process, and which is safer in terms of waste - and produces more power.) As long as it is understood that, while it may seem simpler (and was) to design a reactor employing Uranium because it can in effect spontaneously realize a reactor, even in nature if concentrations and conditions are right. Whereas Thorium requires an indirect approach, but yields superior results in absolutely every other respect.

It is telling that neither Rubbia nor Bowman truly seem to have appreciated this deeper insight, and effectively stopped at the most basic version - but then, understanding that the idea was given away for free to the community but in the abbreviated from, without the aspects of the present disclosure, it should not be all that surprising that what was latched onto was just the two obvious and concrete applications and embodiments that flowed from the original disclosure.

However, the original invention was always much more than the public disclosure, as important and essential as that was.

To continue: it was always an objective of the original invention, which also motivated the public disclosure, that nations other than those which might possess abundant Thorium deposits would be able to source other elements as feedstocks for the more efficient and flexible AD-SCR "STEM" system of the present disclosure and original invention in 1989/90.

The extra efforts and lengths to design mores sophisticated and comprehensive energy capture and recovery systems are a key element in compensating for the lesser energy productivity that may be assumed is true of other feedstocks as move "back" the mass deficit curve.

If one is to overlay a chart of the abundances in the earth's crust, and in the sea, of elements by atomic number, against the nucleon binding energy curve, one will see an alignment of numerous candidate elements for which fission processes are possible, and in fact specifically enabled by the comprehensive present and original version of the accelerator driven sub-critical reactor system.

It is not the purpose of the present disclosure to analyze all candidates for their relative efficiency as candidates for fertile breeding by an accelerator driven and in general indirectly assisted and "pumped" system.

In general, the trade-offs as compared to Thorium are:
Against:
   1. Generally may be expected to be less energy productive, (although certain reaction process designs may reveal other possibilities), given an equally-efficient energy collection and conversion system of the present disclosure.
   2. Some candidates may be acceptable candidates as fertile sources to breed fissile isotopes, but the fission products of other cycles may produce radioactive fission products which are radioactive much longer, at least without further AD-SCR-type processing.
In favor:
   1. Cheaper and more widely available and abundant materials
   2. Potentially valuable non-radioactive and relatively more rare (and thus, typically very marketable) elements as fission products (note that immediate fission products that decay rapidly produce other elements that may be valuable rather than a "waste" product. This may make the system of the present disclosure, for very rare elements, economically more efficient to that degree and, in effect, a kind of materials synthesis manufacturing process.
   3. lighter-weight fuel compositions, which can make for easier processing and handling.
   4. More common elements which are processed and worked more widely for other industrial processes and technologies may bring with them much greater materials processing knowledge and additional techniques that may have a bearing on benefits from shaping and processing the materials for use as fuel that will make the fuel and the energy production system that much more productive, including greater knowledge of properties of the elements in nano-scale powders and crystals, aerosols, etc., which may provide different fuel forms and new and more efficient designs of these materials prepared, not in bulk, but in nano-scale compositions, alone or in meta-material combinations and on substrates advantageous for neutron bombardment.
   5. Further leveraging the design and materials processing knowledge that may be obtained from the use of more common and familiar elements as fuel that are still candidates for fertile breeding may include the design of composite fuels that are not in pure elemental form, but rather composites designed to provide more efficient nucleon interactions by virtue of leveraging weaker forces or taking into account the benefits of element orientation in a "fixing" lattice. And that is just one example of collateral benefits from using more familiar materials systems, which may contribute to more efficient reaction processes.
   6. Knowledge development in the industrial processing of photon-ion interactions may open up methods of improving reaction processes and reactor designs, such as the potential use of laser-assisted methods, including derived from knowledge developed in laser-based fusion systems.

This comparison is not to imply that, by comparison to Uranium that Thorium isn't the obvious first object of such a system, which was what was expected from the initial public disclosure by the original inventor.

Rather, that the value of the present and complete system is in its greater efficiency for Thorium, as well as for opening up the possibility for potentially less technically-efficient, but potentially economically competitive - or superior - in net, as well as enabling those without access to Thorium a method and approach that can make use of potentially a wide range of elements.

And as the other side of that flexibility of fuel use, there is the potentially valuable by-product of synthesizing relatively rare elements which are otherwise in diminishing natural abundance or which may be much more expensive and difficult to obtain by mining-type extraction, such as certain metals and rare-earths.

Finally, this critical feature of the present system then brings forward the application of the present efficient collection and recovery system to nuclear fusion. Continuing then from the earlier sequence of disclosure:
1. Thus, this form of energy collection and conversion system can also be employed in a fusion reactor system. The net efficiency gains of this addition can substantially change what may be termed the net "break-even point" of a fusion system, by introducing major efficiency gains.
2. Thus, the proposed collection and conversions methods, structures and systems may be equally understood as equally enabling a new category of fusion reactor system, adapted to the differing details of such systems, with fewer difference in particle and laser based systems than Tokomak-type systems, but none-the-less adaptable in pattern to any fusion-type system.

In general, the present disclosure, for the first time since the invention in 1989 of the complete system and the public disclosure of the now familiar basic accelerator-driven system components starting in 1990, presents that complete system and all its benefits, which further add to the decisive case for Thorium-based accelerator-driven reactors which the original public disclosure nearly 25 years ago made possible, while opening a wide world of fuel options, synthesis of rare elements, power conversion methods, and optical energy distribution stations, while also offering the potential of reducing the hurdle for fusion power to reach the break-even and join Thorium and other AD-SCR "STEM" reactor systems in supplying the world with a brand new source of energy that is:
- extremely abundant
- absolutely safe
- revolutionary in its efficiency and potential for lowering the cost of energy
- without changing the chemical balances of the atmosphere, land or sea
- and while also providing a path to eliminating the radioactive waste that was the tarnishing legacy of the early pioneers of nuclear energy, who gave us so much and made the pathway forward possible.

The system and methods above has been described in general terms as an aid to understanding details of preferred embodiments of the present invention. In the description herein, numerous specific details are provided, such as examples of components and/or methods, to provide a thorough understanding of embodiments of the present invention. Some features and benefits of the present invention are realized in such modes and are not required in every case. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

Reference throughout this specification to "one embodiment", "an embodiment", or "a specific embodiment" means that a particular feature, structure, or characteristic described in connection with the embodiment is included in at least one embodiment of the present invention and not necessarily in all embodiments. Thus, respective appearances of the phrases "in one embodiment", "in an embodiment", or "in a specific embodiment" in various places throughout this specification are not necessarily referring to the same embodiment. Furthermore, the particular features, structures, or characteristics of any specific embodiment of the present invention may be combined in any suitable manner with one or more other embodiments. It is to be understood that other variations and modifications of the embodiments of the present invention described and illustrated herein are possible in light of the teachings herein and are to be considered as part of the spirit and scope of the present invention.

It will also be appreciated that one or more of the elements depicted in the drawings/figures can also be implemented in a more separated or integrated manner, or even removed or rendered as inoperable in certain cases, as is useful in accordance with a particular application.

Additionally, any signal arrows in the drawings/Figures should be considered only as exemplary, and not limiting, unless otherwise specifically noted. Furthermore, the term "or" as used herein is generally intended to mean "and/or" unless otherwise indicated. Combinations of components or steps will also be considered as being noted, where terminology is foreseen as rendering the ability to separate or combine is unclear.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The foregoing description of illustrated embodiments of the present invention, including what is described in the Abstract, is not intended to be exhaustive or to limit the invention to the precise forms disclosed herein. While specific embodiments of, and examples for, the invention are described herein for illustrative purposes only, various equivalent modifications are possible within the spirit and scope of the present invention, as those skilled in the relevant art will recognize and appreciate. As indicated, these modifications may be made to the present invention in light of the foregoing description of illustrated embodiments of the present invention and are to be included within the scope of the present invention.

Thus, while the present invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope of the invention as set forth. Therefore, many modifications may be made to adapt a particular situation or material to the essential scope of the present invention. It is intended that the invention not be limited to the particular terms used in following claims and/or to the particular embodiment disclosed as the best mode contemplated for carrying out this invention, but that the invention will include any and all embodiments and equivalents falling within the scope of the appended claims. Thus, the scope of the invention is to be determined solely by the appended claims.

## Claims

1. A method for operating an accelerator-driven subcritical reactor including a subcritical nuclear reactor core coupled to a high energy particle accelerator, the subcritical nuclear reactor core including a fuel achieving criticality responsive to a plurality of neutrons and producing a plurality of reaction products, the fuel disposed within a containment system, the method being **characterised by** further comprising:
a) exiting a plurality of different classes of reaction products from the containment system; and
b) capturing said plurality of different classes of reaction products using a plurality of collection channels, a particular collection channel associated with a particular class of reaction product tuned for capturing its associated class of reaction product.

2. The method of claim 1 wherein said plurality of different classes of reaction products include one or more of a class selected from the group consisting of an electromagnetic emission class, a charged particle emission class, a neutral particle emission class, and combinations thereof.

3. The method of claim 2 wherein said plurality of collection channels include one or more of a channel selected from the group consisting of an optic collection channel, an electrostatic/magnetic collection channel, and a mechanical collection channel, and combinations thereof.

4. The method of claim 3 wherein a particular one collection channel is associated with a particular one reaction product, wherein any said optic collection channel is associated with any electromagnetic emission class, wherein any said electrostatic/magnetic collection channel is associated with any charged particle emission class, and wherein any said mechanical collection channel is associated neutral particle emission class.

5. The method of claim 3 wherein said group further comprises a feedback channel returning a class of reaction product back to the containment system.

6. The method of claim 4 wherein said group further comprises a feedback channel returning a class of reaction product back to the containment system.

7. An accelerator-driven subcritical reactor including a subcritical nuclear reactor core coupled to a high energy particle accelerator, the subcritical nuclear reactor core including a fuel achieving criticality responsive to a plurality of neutrons and producing a plurality of reaction products, the accelerator-driven subcritical reactor being **characterised by** further comprising:
a) a containment system for the fuel including a plurality of exit channels, each exit channel exiting a different class of reaction products from the fuel; and
b) a plurality of collection channels, a particular collection channel associated with a particular class of reaction product with each said collection channel tuned for capturing its associated class of reaction product.

8. The reactor of claim 7 wherein said plurality of different classes of reaction products include one or more of a class selected from the group consisting of an electromagnetic emission class, a charged particle emission class, a neutral particle emission class, and combinations thereof.

9. The reactor of claim 8 wherein said plurality of collection channels include one or more of a channel selected from the group consisting of an optic collection channel, an electrostatic/magnetic collection channel, and a mechanical collection channel, and combinations thereof.

10. The reactor of claim 9 wherein a particular one collection channel is associated with a particular one reaction product, wherein any said optic collection channel is associated with any electromagnetic emission class, wherein any said electrostatic/magnetic collection channel is associated with any charged particle emission class, and wherein any said mechanical collection channel is associated neutral particle emission class.

11. The reactor of claim 9 wherein said group further comprises a feedback channel returning a class of reaction product back to the containment system.

12. The reactor of claim 10 wherein said group further comprises a feedback channel returning a class of reaction product back to the containment system.

## Patentansprüche

1. Ein Verfahren zum Betreiben eines beschleunigergetriebenen unterkritischen Reaktors enthaltend einen unterkritischen Kernreaktorkern, der an einen Hochenergie-Teilchenbeschleuniger gekoppelt ist, wobei der unterkritische Kernreaktorkern, der einen Brennstoff enthält, antwortend auf eine Vielzahl von Neutronen Kritikalität erreicht und eine Vielzahl von Reaktionsprodukten erzeugt, wobei der Brennstoffinnerhalb eines Sicherheitsbehältersystems entsorgt wird, wobei das Verfahren **dadurch gekennzeichnet ist, dass** es weiterhin umfasst:
a) Ausscheiden einer Vielzahl von unterschiedlichen Klassen von Reaktionsprodukten aus dem Sicherheitsbehältersystem; und
b) Erfassen besagter Vielzahl von unterschiedlichen Klassen von Reaktionsprodukten unter Verwendung einer Vielzahl von Sammelkanälen, wobei ein bestimmter Sammelkanal einer bestimmten Klasse von Reaktionsprodukt zugeordnet ist, der zum Erfassen seiner zugeordneten Klasse von Reaktionsprodukt eingestellt ist.

2. Das Verfahren nach Anspruch 1, wobei besagte Vielzahl unterschiedlicher Klassen von Reaktionsprodukten eine oder mehrere einer Klasse ausgewählt aus der Gruppe bestehend aus einer Klasse für elektromagnetische Emission, einer Klasse für die Emission geladener Teilchen, einer Klasse für die Emission neutraler Teilchen und Kombinationen davon enthält.

3. Das Verfahren nach Anspruch 2, wobei besagte Vielzahl von Sammelkanälen einen oder mehrere von einem Kanal ausgewählt aus der Gruppe bestehend aus einem optischen Sammelkanal, einem elektrostatischen / magnetischen Sammelkanal und einem mechanischen Sammelkanal und Kombinationen davon enthält.

4. Das Verfahren nach Anspruch 3, wobei ein bestimmter Sammelkanal einem bestimmten Reaktionsprodukt zugeordnet ist, wobei jeder besagte optische Sammelkanal irgendeiner Klasse für elektromagnetische Emission zugeordnet ist, wobei jeder besagte elektrostatische / magnetische Sammelkanal irgendeiner Klasse für die Emission geladener Teilchen zugeordnet ist, und wobei jeder besagte mechanische Sammelkanal einer Klasse für die Emission neutraler Teilchen zugeordnet ist.

5. Das Verfahren nach Anspruch 3, wobei besagte Gruppe ferner einen Rückführungskanal umfasst, der eine Klasse von Reaktionsprodukt zum Sicherheitsbehältersystem zurückführt.

6. Das Verfahren nach Anspruch 4, wobei besagte Gruppe ferner einen Rückführungskanal umfasst, der eine Klasse von Reaktionsprodukt zum Sicherheitsbehältersystem zurückführt.

7. Ein beschleunigergetriebener unterkritischer Reaktor enthaltend einen unterkritischen Kernreaktorkern, der an einen Hochenergie-Teilchenbeschleuniger gekoppelt ist, wobei der unterkritische Kernreaktorkern, der einen Brennstoff enthält, antwortend auf eine Vielzahl von Neutronen Kritikalität erreicht und eine Vielzahl von Reaktionsprodukten erzeugt, wobei der beschleunigergetriebene unterkritische Reaktor **dadurch gekennzeichnet ist, dass** er weiterhin umfasst:
a) ein Sicherheitsbehältersystem für den Brennstoff, das eine Vielzahl von Ausgangskanälen enthält, wobei jeder Ausgangskanal eine andere Klasse von Reaktionsprodukten aus dem Brennstoff ausscheidet; und
b) eine Vielzahl von Sammelkanälen, wobei ein bestimmter Sammelkanal einer bestimmten Klasse von Reaktionsprodukt zugeordnet ist, wobei jeder besagte Sammelkanal zum Erfassen seiner zugeordneten Klasse von Reaktionsprodukt eingestellt ist.

8. Der Reaktor nach Anspruch 7, wobei besagte Vielzahl von unterschiedlichen Klassen von Reaktionsprodukten eine oder mehrere einer Klasse ausgewählt aus der Gruppe bestehend aus einer Klasse für elektromagnetische Emission, einer Klasse für die Emission geladener Teilchen, einer Klasse für die Emission neutraler Teilchen und Kombinationen davon enthält.

9. Der Reaktor nach Anspruch 8, wobei besagte Vielzahl von Sammelkanälen einen oder mehrere eines Kanals ausgewählt aus der Gruppe bestehend aus einem optischen Sammelkanal, einem elektrostatischen / magnetischen Sammelkanal und einem mechanischen Sammelkanal und Kombinationen davon enthält.

10. Der Reaktor nach Anspruch 9, wobei ein bestimmter Sammelkanal einem bestimmten Reaktionsprodukt zugeordnet ist, wobei jeder besagte optische Sammelkanal irgendeiner Klasse für elektromagnetische Emission zugeordnet ist, wobei jeder besagte elektrostatische / magnetische Sammelkanal irgendeiner Klasse für die Emission geladener Teilchen zugeordnet ist. und wobei jeder besagte mechanische Sammelkanal einer Klasse für die Emission neutraler Teilchen zugeordnet ist.

11. Der Reaktor nach Anspruch 9, wobei besagte Gruppe ferner einen Rückführungskanal umfasst, der eine Klasse von Reaktionsprodukt zu dem Sicherheitsbehältersystem zurückführt.

12. Der Reaktor nach Anspruch 10, wobei besagte Gruppe ferner einen Rückführungskanal umfasst, der eine Klasse von Reaktionsprodukt zu dem Sicherheitsbehältersystem zurückführt.

## Revendications

1. Procédé de fonctionnement d'un réacteur sous-critique entraîné par accélérateur incluant un noyau de réacteur nucléaire sous-critique couplé à un accélérateur de particules à énergie élevée, le noyau de réacteur nucléaire sous-critique incluant un combustible atteignant une criticité répondant à une pluralité de neutrons et produisant une pluralité de produits de réaction, le combustible étant disposé dans un système de confinement, le procédé étant **caractérisé en ce qu'**il comprend en outre :
a) la sortie d'une pluralité de classes de produits de réaction différentes du système de confinement ; et
b) la capture de ladite pluralité de classes de produits de réaction différentes en utilisant une pluralité de canaux de collecte, un canal de collecte particulier associé à une classe de produit de réaction particulière réglé pour capturer sa classe de produit de réaction associée.

2. Procédé selon la revendication 1 dans lequel ladite pluralité de classes de produits de réaction différentes incluent une ou plusieurs d'une classe sélectionnée dans le groupe constitué d'une classe d'émission électromagnétique, d'une classe d'émission de particules chargées, d'une classe d'émission de particules neutres et de combinaison de celles-ci.

3. Procédé selon la revendication 2 dans lequel ladite pluralité de canaux de collecte incluent un ou plusieurs d'un canal sélectionné dans le groupe constitué d'un canal de collecte optique, d'un canal de collecte électrostatique/magnétique et d'un canal de collecte mécanique, et de combinaisons de ceux-ci.

4. Procédé selon la revendication 3 dans lequel un canal de collecte particulier est associé à un produit de réaction particulier, dans lequel tout dit canal de collecte optique est associé à toute classe d'émission électromagnétique, dans lequel tout dit canal de collecte électrostatique/magnétique est associé à toute classe d'émission de particules chargées, et dans lequel tout dit canal de collecte mécanique est associé à une classe d'émission de particules neutres.

5. Procédé selon la revendication 3 dans lequel ledit groupe comprend en outre un canal de retour renvoyant une classe de produit de réaction au système de confinement.

6. Procédé selon la revendication 4 dans lequel ledit groupe comprend en outre un canal de retour renvoyant une classe de produit de réaction au système de confinement.

7. Réacteur sous-critique entraîné par accélérateur incluant un noyau de réacteur nucléaire sous-critique couplé à un accélérateur de particules à énergie élevée, le noyau de réacteur nucléaire sous-critique incluant un combustible atteignant une criticité répondant à une pluralité de neutrons et produisant une pluralité de produits de réaction, le réacteur nucléaire sous-critique entraîné par accélérateur étant **caractérisé en ce qu'**il comprend en outre :
a) un système de confinement pour le combustible incluant une pluralité de canaux de sortie, chaque canal de sortie faisant sortir une classe de produits de réaction différente du combustible ; et
b) une pluralité de canaux de collecte, un canal de collecte particulier associé à une classe de produit de réaction particulière avec chaque dit canal de collecte réglé pour capturer sa classe de produit de réaction associée.

8. Réacteur selon la revendication 7 dans lequel ladite pluralité de classes de produits de réaction différentes incluent une ou plusieurs d'une classe sélectionnée dans le groupe constitué d'une classe d'émission électromagnétique, d'une classe d'émission de particules chargées, d'une classe d'émission de particules neutres et de combinaison de celles-ci.

9. Réacteur selon la revendication 8 dans lequel ladite pluralité de canaux de collecte incluent un ou plusieurs d'un canal sélectionné dans le groupe constitué d'un canal de collecte optique, d'un canal de collecte électrostatique/magnétique et d'un canal de collecte mécanique, et de combinaisons de ceux-ci.

10. Réacteur selon la revendication 9 dans lequel un canal de collecte particulier est associé à un produit de réaction particulier, dans lequel tout dit canal de collecte optique est associé à toute classe d'émission électromagnétique, dans lequel tout dit canal de collecte électrostatique/magnétique est associé à toute classe d'émission de particules chargées, et dans lequel tout dit canal de collecte mécanique est associé à une classe d'émission de particules neutres.

11. Réacteur selon la revendication 9 dans lequel ledit groupe comprend en outre un canal de retour renvoyant une classe de produit de réaction au système de confinement.

12. Réacteur selon la revendication 10 dans lequel ledit groupe comprend en outre un canal de retour renvoyant une classe de produit de réaction au système de confinement.
